# FASCICULE DE BREVET EUROPEEN

(11) **EP 1 135 018 B1**
(45) Date de publication et mention de la délivrance du brevet: **28.07.2004**
(21) Numéro de dépôt: 99947557.7
(22) Date de dépôt: 12.10.1999
(51) Int. Cl.: A01G 13/02

(54) **COUVRE-SOL, PROCEDE ET DISPOSITIF DE FABRICATION D'UN TEL COUVRE-SOL**
ERDBODENBELAG, VORRICHTUNG UND VERFAHREN ZUR HERSTELLUNG EINES SOLCHEN ERDBODENBELAGES
GROUND-COVER, METHOD AND DEVICE FOR MAKING SAME

(30) Priorité: 03.12.1998 FR 9815738; 03.12.1998 FR 9815739
(43) Date de publication de la demande: 26.09.2001
(73) Titulaire: Fouan, René-Antoine, 06150 Cannes la Bocca (FR)
(72) Inventeur: Fouan, René-Antoine, 06150 Cannes la Bocca (FR)
(74) Mandataire: Benech, Frédéric
(86) Numéro de dépôt international: PCT/FR1999/002466
(87) Numéro de publication internationale: WO 2000/032030

(56) Documents cités:
- EP-A- 0 556 150
- WO-A-96/17516
- FR-A- 2 596 244
- US-A- 2 749 964
- US-A- 3 542 250
- US-A- 3 618 856
- US-A- 5 207 826
- US-A- 5 556 033

## Description

La présente invention concerne un couvre-sol pour la protection d'un terrain et des plantations qu'il comporte.

Elle concerne également un procédé et un dispositif de fabrication d'un tel couvre-sol.

Elle trouve une application particulièrement importante bien que non exclusive dans le domaine de la protection des sols à ciel ouvert, ameublis, comportant des plantations, par exemple du type des sols situés en bordure des autoroutes ou dans le domaine paysager urbain.

De tels sols sont en effet sujets à l'apparition de mauvaises herbes qui nécessitent alors un désherbage répétitif et coûteux peu facile à effectuer à proximité immédiate de plantations.

De même, il peut s'avérer nécessaire de protéger de tels sols et les racines des plantations qu'ils contiennent de la chaleur, du froid et/ou des risques de ravinage en cas de pluies.

On connaît déjà plusieurs techniques de protection de sols ou terrains comportant des plantations.

Une première technique est de déposer des écorces broyées biodégradables, par exemple de pin, au pied des plantations.

Cette technique ne permet pas de garantir le recouvrement complet du sol de façon prolongée, les écorces pouvant être déplacées, par exemple par un animal ou par le vent. Elles nécessitent de plus de prévoir des quantités importantes pour être efficaces, les écorces n'étant pas jointives.

Un autre inconvénient de cette technique provient également de la nécessité d'un épandage qui ne peut être que lent et manuel.

Une autre technique, très ancienne, consiste à déposer de la paille autour des plantations. Cette technique appelée paillage permet d'utiliser une matière biodégradable qui permet d'enrichir le sol. Elle est cependant inesthétique et présente les mêmes types d'inconvénients que ceux décrits ci-dessus, la paille pouvant s'envoler facilement et/ou être déplacée par des animaux.

Une technique plus récente consiste à déposer des bandes de matière plastique de couleur sombre, verte ou noire, entre les plantations.

Cette technique présente ici encore des inconvénients.

La pose nécessite en effet des opérations de coupe du matériau plastique et de mise en place autour des plantations particulièrement compliquées si les plantations ne sont pas alignées. Par ailleurs, les multiples bandes et morceaux de matière plastique nécessitent d'être fixés au sol, par exemple par l'intermédiaire de crochets ou pics plantés en terre, ce qui est une opération supplémentaire entraînant souvent des déchirures de la matière.

Les bandes de matière plastique ne sont pas biodégradables et donc nuisibles à l'environnement. Elles peuvent être soulevées par le vent, et des graines sauvages peuvent germer dans les interstices. Elles ne laissent pas, ou peu, pénétrer l'eau de pluie dans le sol qui coule à leur surface, ce qui peut entraîner des inondations et empêche surtout le sol de bénéficier de l'eau de pluie.

Enfin, dans les régions chaudes, le film de matière plastique de couleur sombre génère un échauffement du sol par les radiations solaires, ce qui lui est nuisible.

Une autre technique connue consiste à dérouler sur le sol des rouleaux comprenant une couche supérieure de garnissage, pour améliorer l'esthétisme, solidaire d'un support de maintien formé par un film de matière plastique.

Une telle technique présente ici encore des inconvénients. L'utilisation de rouleaux nécessite en effet des découpes fastidieuses entraînant des pertes de matière, met en oeuvre des raccords peu étanches à la base des plantations et demande de nombreuses fixations dans le sol, par exemple des crochets en métal, ce qui est coûteux.

De tels rouleaux offrent également, tout comme les bandes de matière plastique, une prise au vent aux jointures entre rouleaux, les films plastiques accélérant par ailleurs l'écoulement des eaux en cas de forte chute de pluie, ce qui est ici encore générateur d'engorgement et d'une mauvaise humidification du sol.

On connaît également (US-A-5,556,033 ; FR-A-2 596 244 ; WO 96 17516 ; US-A-5,207,826) des couvresols au moins en partie conformes au préambule de la revendication 1.

De tels couvresols ne permettent cependant et notamment pas une absorption partielle des eaux de pluie tout en restant perméable.

La présente invention vise à fournir un couvre-sol, un procédé et un dispositif de fabrication d'un tel couvre-sol, répondant mieux que ceux antérieurement connus aux exigences de la pratique, notamment en ce qu'elle propose un couvre-sol continu, facilement biodégradable, opaque à la lumière, ce qui évite ou limite considérablement la germination et le développement de mauvaises herbes.

Le couvre-sol de l'invention est propre à absorber partiellement les eaux de pluies pour lesquelles il est au moins en partie perméable, ce qui permet de maintenir l'humidité du sol et de jouer un rôle de réservoir tampon en cas de forte chute d'eau.

Il ne nécessite pas de fixation sur le terrain qu'il protège sur toute sa surface avec une excellente adaptation aux aspérités et dénivellations tout en épousant exactement les contours des plantations, et ce de façon aisée, rapide, autonome, et peu coûteuse à mettre en oeuvre grâce à un procédé en continu mécanisable.

Dans ce but l'invention propose notamment un couvre-sol pour la protection d'un terrain, conforme à la revendication 1.

Avantageusement les fibres naturelles sont courtes.

Par fibres courtes, il faut entendre des fibres de longueurs moyennes inférieures à de l'ordre de 5 cm, par exemple inférieure à environ 3 cm.

De façon avantageuse, le couvre-sol est fabriqué avec des éléments (fibres, liant, agent opacifiant) qui sont tous 100% végétal, donc entièrement naturels.

Le mélange obtenu est opaque ou sensiblement opaque à la lumière, c'est-à-dire qu'il laisse passer moins de 20% de la lumière, voire moins de 10%, voire moins de 5% ou encore moins (entièrement opaque).

Dans des modes de réalisation avantageux, on a de plus recours à l'une et/ou à l'autre des dispositions suivantes :
- les fibres sont des fibres de noix de coco de longueurs moyennes inférieures à de l'ordre de 5 cm ;
- le liant comporte un produit qui se solidifie rapidement à l'action de l'air. Par rapidement il faut entendre en un temps inférieur à quelques heures à température ambiante, celle-ci étant par exemple néanmoins supérieure à de l'ordre de 10 à 15° C.

Avantageusement, la prise du liant est très rapide, c'est-à-dire quelques minutes, par exemple si ce dernier est préalablement chauffé.

Avantageusement, le produit solidifiable à l'air est un produit réticulable à froid. Par réticulable à froid il faut entendre un produit qui se solidifie sous forme de chaînes de molécules à des températures inférieures à de l'ordre de 35° C, de façon rapide, par exemple en quelques heures, par exemple trois heures à 20° C. Mais le produit réticulable utilisé peut également être chaud.
- le produit solidifiable à l'air est du latex naturel ;
- l'agent opacifiant à la lumière est formé de morceaux de matériaux ou de fibres longues biodégradables opaques à la lumière.

Par fibres longues, il faut entendre des fibres de plusieurs centimètres, par exemple en moyenne supérieures à de l'ordre de 6 à 8 cm ;
- la nappe comporte de plus, seule ou en combinaison, un ou plusieurs des produits suivants : un agent anti-moussant, un agent ignifuge, un agent retardateur de flamme, un agent herbicide, un colorant naturel, un agent antifongique, un engrais ;
- le couvre-sol comporte de plus des semences végétales réparties dans au moins une partie de la nappe ;
- la nappe comporte, pour 100 parties en poids de fibres, entre environ 40 parties et environ 80 parties en poids de produit liant ;
- le produit liant comporte un produit qui se solidifie rapidement à l'air et un produit de charge, tel que pour 100 parties en poids de fibres, il comprend entre environ 20 parties en poids et 50 parties en poids de produit qui se solidifie rapidement et entre environ 10 parties en poids et environ 40 parties en poids de produit de charge ;

Le produit de charge permet de réduire les quantités nécessaires en produit qui se solidifie toujours plus coûteux que le produit de charge.
- le mélange de fibres et d'agent opacifiant est composé, pour 100 parties en poids de mélange, entre environ 50 et environ 75 parties en poids de fibres de longueur comprise entre environ 1 cm et environ 5 cm, et entre environ 25 et environ 50 parties en poids d'agent opacifiant de dimension maximale moyenne comprise entre environ 3 mm et environ 15 mm.

L'invention propose également un procédé de fabrication d'un couvre-sol du type décrit ci-dessus.

Elle propose également un procédé de fabrication d'un couvre-sol pour la protection d'un terrain, caractérisé en ce qu'on forme un mélange aqueux en mélangeant de l'eau, un liant comprenant un produit solidifiable à l'air, un produit de charge et un ou plusieurs agents présentant une activité spécifique, on prépare séparément un mélange de fibres sèches naturelles avec ou sans agent opacifiant complémentaire, on projette en continu ledit mélange de fibres sèches simultanément à la pulvérisation dudit mélange aqueux, de sorte qu'on forme ainsi un produit pâteux, opaque à la lumière qui s'étale sur le terrain à protéger, puis on laisse sécher et solidifier.

Avantageusement, on forme le mélange aqueux en mélangeant, pour 100 parties en poids d'eau, entre environ 20 parties en poids et 50 parties en poids de produit solidifiable à l'air et entre environ 10 parties en poids et environ 40 parties en poids de produit de charge.

Egalement avantageusement, on ajoute dans le mélange aqueux un ou plusieurs des produits suivants : un agent anti-moussant, un agent ignifuge, un agent retardateur de flamme, un agent herbicide, un colorant naturel, un agent antifongique, un engrais.

Dans un mode de réalisation avantageux, on forme le mélange de fibres sèches et d'agent opacifiant avec entre environ 1/2 et environ 3/4 du mélange composé de fibres de longueur comprise entre environ 1 cm et environ 5 cm, et avec entre environ 1/4 et environ 1/2 du mélange composé d'agent opacifiant formé de morceaux de matière dont la plus grande dimension est comprise entre environ 3 mm et environ 15 mm.

Avantageusement, on ajoute des semences au mélange de fibres sèches, avant projection.

Egalement avantageusement, on projette le mélange aqueux avec un débit moyen liquide de l'ordre de 3 à 5 litres à la minute et le mélange de fibres sèches avec un débit gazeux moyen de l'ordre 30 à 50 litres à la minute.

Dans un mode de réalisation avantageux, on forme une nappe d'épaisseur comprise entre 50 mm et 3 cm, par exemple de l'ordre de 1 cm.

L'invention propose également un dispositif de fabrication d'un couvre-sol du type décrit ci-dessus, mettant avantageusement en oeuvre le procédé également décrit ci-dessus.

Elle propose également un dispositif pour la fabrication d'un couvre-sol de protection d'un terrain, caractérisé en ce qu'il comprend au moins une cuve de préparation d'un mélange aqueux pour préparer un produit liant, des moyens d'alimentation de fibres naturelles et éventuellement d'au moins un agent opacifiant, des moyens de foisonnage / déchiquetage desdites fibres naturelles, des moyens de reprise des fibres foisonnées par des moyens ventilateurs d'aspersion desdites fibres sur le terrain et des moyens de projection du mélange aqueux simultanément à ladite aspersion de fibres, de sorte qu'il est formé un mélange pâteux et opaque à la lumière propre à constituer le couvre-sol après séchage et solidification.

Un tel dispositif, qui permet l'application par projection, est peu encombrant et donc facilement transportable, par exemple sur la plate-forme d'une camionnette, ce qui permet d'atteindre des terrains peu accessibles.

Le mélange fibres, produit liant et, s'il y a lieu, produit opacifiant se fait juste à la sortie des moyens de projection et d'aspersion, à l'air libre, ce qui évite notamment tout colmatage des canalisations d'alimentation des produits.

L'invention sera mieux comprise à la lecture de la description qui suit de modes de réalisation donnés à titre d'exemples non limitatifs.

La description se réfère aux dessins qui l'accompagnent dans lesquels :
- La figure 1 est une vue en coupe d'un système couvre-sol selon l'art antérieur.
- La figure 2 est une vue en coupe du couvre-sol selon l'invention.
- La figure 3 est un schéma simplifié d'un mode de réalisation d'un dispositif selon l'invention.
- La figure 4 est un schéma simplifié d'un appareil d'alimentation en semences utilisé dans un autre mode de réalisation de l'invention.

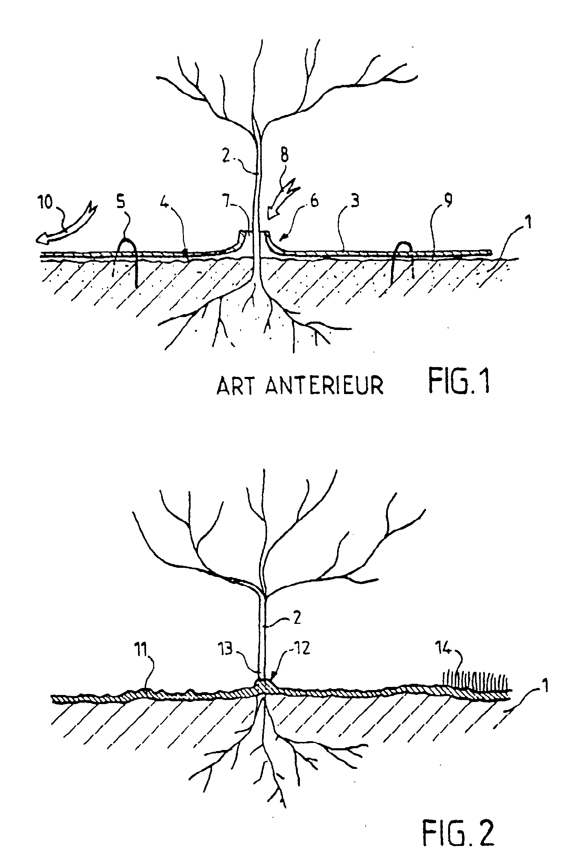

La figure 1 montre un terrain 1 avec une plantation 2, par exemple un arbuste. Le terrain est muni d'un couvre-sol 3 selon l'art antérieur le plus courant, constitué d'un film en matière plastique sombre. Le film est fixé à la surface 4 du sol par des crochets métalliques 5, et épouse grossièrement en 6 le pied de la plantation 2, laissant un interstice 7 par lequel peuvent pénétrer des mauvaises graines (flèche 8).

Le couvre-sol 3 n'est par ailleurs pas jointif avec la surface 4 laissant un espace 9 à de nombreux endroits, ce qui favorise le décollement du film par le vent. En cas de pluie l'eau 10 ruisselle sur la surface du film et ne peut pénétrer dans le sol.

Le figure 2 montre le même terrain 1 avec une plantation 2. Le terrain est cette fois muni d'un couvre-sol 11 selon l'invention, opaque, qui épouse parfaitement la surface 4 du sol en ne laissant aucun espace.

Le couvre-sol est en effet parfaitement jointif avec la surface du sol et ses aspérités puisqu'il a été étalé sans forme pâteuse avant sa solidification.

De même, il épouse parfaitement en 12 le pied 13 de la plantation 2. Enfin, dans un mode de réalisation, des graines ou semences ayant été insérées dans la nappe du couvre-sol au moment de sa formation, on obtient par exemple du gazon 14, qui habille le couvre-sol.

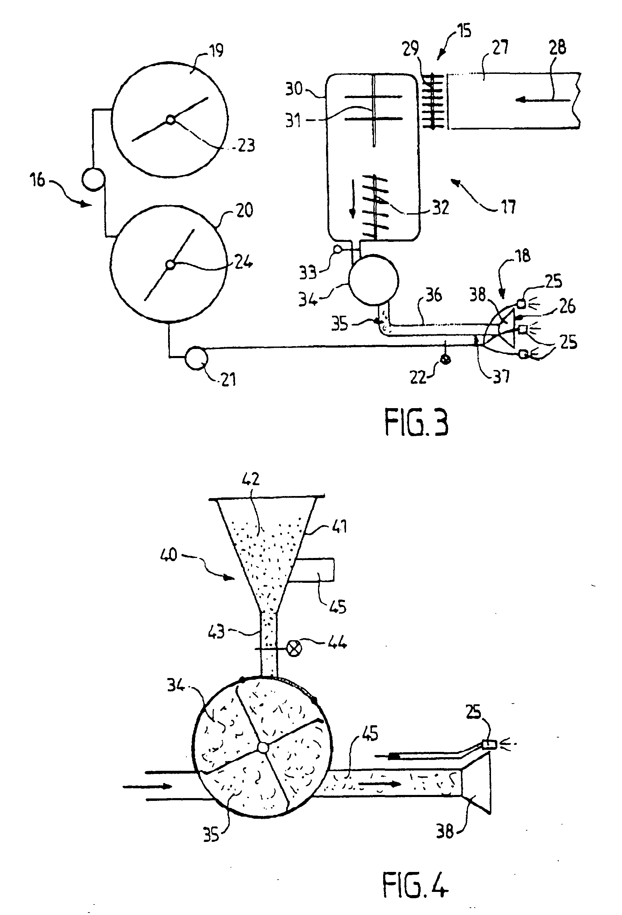

La figure 3 montre schématiquement un mode de réalisation du dispositif mobile 15 de fabrication d'un couvre-sol selon l'invention.

Le dispositif 15 comprend un circuit 16 de préparation et de projection du produit liant, ou liant, en continu, et un circuit 17 de préparation des fibres naturelles et de l'agent opacifiant également en continu.

Ce circuit 17 est séparé du circuit 16, et rejoint physiquement ce dernier au niveau de la lance 18 de projection simultanée du liant et des fibres.

Plus précisément, le circuit 16 comprend une première cuve 19 de préparation du liant, qui alimente une deuxième cuve 20, de soutirage en continu du liant par une pompe 21 de débit réglable par l'utilisateur via une molette de réglage manuel située au niveau de la lance 18.

Des dispositifs électriques 23 et 24 de brassage du liant sont prévus. La première cuve 19 de préparation permet de dissocier fabrication et alimentation, ce qui évite la rupture en alimentation du liant qui, du fait de sa solidification ne peut pas non plus être préparé trop à l'avance.

Dans le mode de réalisation plus particulièrement décrit ici, le circuit 16 comprend trois buses en parallèle 25 de projection ou vaporisation du produit, disposées à la sortie de la lance 18, au-dessus de la sortie 26 du circuit 17 de préparation et de projection des fibres, le mélange du liant avec ces dernières se faisant donc au moment de la projection sur le sol.

Les buses ou gicleurs 25 pour vaporisation du liant peuvent bien entendu être en nombre plus réduit ou supérieur, par exemple une, deux ou quatre.

Le circuit 17 comprend quant à lui un tapis roulant 27 d'amenée des balles de fibres préalablement coupées sensiblement à des dimensions prédéterminées, balles qui sont introduites en 28 et qui comporte des morceaux de coque de coco calibrés d'environ 5 à 10 mm de largeur.

Le tapis roulant 27 alimente en continu un déchiqueteur/foisonneur électrique 29, qui va permettre de séparer les fibres et/ou de les amener aux dimensions moyennes recherchées pour un bon mélange avec le liant.

Le foisonneur 29 alimente une cuve intermédiaire 30 munie d'une pale de brassage mécanique 31 permettant d'éviter un effet tunnel dans la cuve 30.

Celle-ci comporte, en fond de cuve, une vis sans fin 32 qui alimente, via un clapet 33 de fermeture de la cuve, et au travers d'un couteau (non représenté) une turbine soufflante 34.

Le couteau permet s'il y a lieu de recouper les fibres à une dimension moyenne de quelques centimètres, par exemple inférieure à de l'ordre de 4 cm, ce qui évite aux fibres de se mettre en mèches et de venir colmater le ventilateur.

Les fibres sèches sont évacuées par un tube 36 qui se termine par une partie flexible 37 au niveau de la lance saisissable manuellement par un utilisateur, et une buse 38 de projection des fibres et de l'agent opacifiant.

La figure 4 montre un mode de réalisation particulier permettant l'alimentation en semences du couvre-sol en continu.

L'introduction de semences dans le mélange fibreux va permettre l'engazonnement ou l'introduction de graines de végétaux dans le couvre-sol des surfaces traitées, ce qui favorise l'accélération ou la o stabilisation et évite encore plus le ravinement, par exemple dans le cas de talus à forte pente, comme ceux des autoroutes ou du chemin de fer.

Le mélange fibreux, et son liant à base de latex naturel dans le mode de réalisation plus particulièrement décrit ici, constituent en effet un excellent support de culture stabilisé, autorisant la germination des graines qui viennent ensuite chercher leurs racines dans le sol.

Dans la suite de la description on utilisera les mêmes numéros de référence pour désigner les mêmes éléments.

La figure 4 montre donc un dispositif 40 raccordé à la turbine 34 alimentée en fibres 35. Le dispositif 40 comprend un entonnoir 41 d'alimentation en graines 42 raccordé au carter de la turbine soufflante 34 via un tube 43 avec molette 44 de réglage du débit.

Un vibreur électrique 45 est avantageusement prévu pour assurer un débit homogène des graines qui se mélangent avec les fibres dans la turbine, et sortent sous forme de mélange graines/fibres 45.

On va maintenant décrire un exemple de réalisation du procédé mis en oeuvre selon l'invention en faisant référence à la figure 3.

L'utilisateur prépare régulièrement des batchs de mélange formant le produit liant à base aqueuse, dans le première cuve 19 par exemple de 1 m³.

Sa composition est par exemple la suivante, pour 1 m² de couvre-sol d'épaisseur de l'ordre de 1,5 cm :
- 350 g de produit réticulable à froid constitué par du latex naturel,
- 250 g de produit de charge (craie, poudre de marbre...) permettant de consommer moins de latex tout en donnant le volume,
- 1000 g d'eau,
- une quantité très faible (quelques grammes) d'agent anti-moussant, d'agent retardateur de flamme, d'agent ignifuge, d'agent herbicide (pour le couvre-sol non destiné à l'ensemencement) etc.

D'autres produits pour obtenir le produit liant solidifiable à l'air peuvent bien entendu être utilisés tels que le latex synthétique ou le styrène, du moment qu'ils présentent des qualités mécaniques suffisantes de souplesse et de résistance à l'arrachement et au lessivage.

Simultanément on prépare via le circuit 17 un mélange de fibres naturelles et d'agent opacifiant.

Pour ce faire, on alimente le tapis roulant 27 avec des balles de fibres de noix de coco. Les balles passent une à une dans le déchiqueteur / foisonneur 29 en produisant les fibres courtes et l'agent opacifiant.

Pour ce faire, les pales et la vitesse de fonctionnement du déchiqueteur / foisonneur sont adaptées en fonction des dimensions recherchées, de façon à la portée de l'homme du métier.

Dans le mode de réalisation plus particulièrement décrit ici, il est utilisé des fibres de coco, par exemple avec les proportions suivantes :
pour 1 kg / m² de mélange fibreux, soit environ 15 litres :
   - 2/3 de fibres de coco de 2 à 4 cm de longueur moyenne,
   - 1/3 de coque de noix de coco en morceau d'environ 5 à 10 mm/m (de dimension radiale moyenne).

De telles proportions permettent ainsi d'obtenir un couvre-sol après évaporation de l'eau et solidification, d'un poids d'environ 1,410 kg/m².

Les valeurs ci-dessus sont données à titre d'exemples de façon non limitative.

Une fois les mélanges obtenus séparément, à savoir le liant d'un côté, les fibres et l'agent opacifiant de l'autre, ces mélanges alimentent en continu via la pompe 21 ou le ventilateur 34, d'un côté les gicleurs d'aspersion 25 et de l'autre côté la buse 38 de projection de produits secs.

Le débit d'aspersion par les buses 25 du produit liant est par exemple de 1,35 litre x 3 à la minute.

La turbine d'alimentation en fibres sèches et produits opaques étant quant à elle à un débit de l'ordre de 45 litres / minute, ce qui va prendre de l'ordre de 20 secondes pour équiper 1 m² de terrain.

Comme il va de soi et comme il résulte également de ce qui précède, la présente invention n'est pas limitée aux modes de réalisation plus particulièrement décrits. Elle en embrasse au contraire toutes les variantes et notamment celles où d'autres liants ou agents opaques sont utilisés, celles où les agents opaques sont alimentés séparément d'avec les fibres, et/ou éventuellement mélangés au produit liant, s'ils sont de type liquide ou poudreux.

## Revendications

1. Couvre-sol (11) pour la protection d'un terrain (1), formé par un mélange comprenant des fibres naturelles végétales opaques à la lumière et/ou mélangées avec au moins un agent opacifiant à la lumière, et un produit liant servant à agglomérer lesdites fibres et ledit agent s'il y a lieu, ledit liant étant réticulable, biodégradable et à base aqueuse solidifiable à l'air, **caractérisé en ce que** les fibres sont des fibres de noix de coco et/ou des fibres de chanvre, lesdites fibres étant aspergées sur le sol séparément et en même temps que le liant, pour former une nappe propre à épouser la forme du terrain et à absorber partiellement l'eau pour laquelle elle est au moins en partie perméable.

2. Couvre-sol selon la revendication 1, **caractérisé en ce que** les fibres sont des fibres de noix de coco de longueur moyenne inférieure à de l'ordre de 5 cm.

3. Couvre-sol selon l'une quelconque des revendications précédentes, **caractérisé en ce que** le produit solidifiable à l'air est du latex naturel.

4. Couvre-sol selon l'une quelconque des revendications précédentes, **caractérisé en ce que** l'agent opacifiant à la lumière est formé de morceaux de matériaux ou de fibres longues, biodégradables opaques à la lumière.

5. Couvre-sol selon l'une quelconque des revendications précédentes, **caractérisé en ce que** la nappe comporte de plus, seul ou en combinaison, un ou plusieurs des produits suivants : un agent anti-moussant, un agent ignifuge, un agent retardateur de flamme, un agent herbicide, un colorant naturel, un agent antifongique, un engrais.

6. Couvre-sol selon l'une quelconque des revendications précédentes, **caractérisé en ce qu'**il comporte de plus des semences végétales (42) réparties dans au moins une partie de la nappe.

7. Couvre-sol selon l'une quelconque des revendications précédentes, **caractérisé en ce que** la nappe comporte, pour 100 parties en poids de fibres, entre environ 40 parties et environ 80 parties en poids de produit liant.

8. Couvre-sol selon la revendication 7, **caractérisé en ce que** le produit liant comporte un produit solidifiable à l'air et un produit de charge, et **en ce que** pour 100 parties en poids de fibres, il comprend entre environ 20 parties en poids et environ 50 parties en poids de produit solidifiable et entre environ 10 parties en poids et environ 40 parties en poids de produit de charge.

9. Couvre-sol selon l'une quelconque des revendications précédentes, **caractérisé en ce que** le mélange de fibres et d'agent opacifiant est composé, pour 100 parties en poids de mélange, entre environ 50 parties et environ 75 parties en poids de fibres de longueur comprise entre environ 1 cm et environ 5 cm et entre environ 25 parties et environ 50 parties en poids d'agent opacifiant formé de morceaux de matériau de plus grande dimension comprise entre environ 3 mm et environ 15 mm.

10. Procédé de fabrication d'un couvre-sol (11) pour la protection d'un terrain (1), **caractérisé en ce qu'**on forme un mélange aqueux en mélangeant de l'eau, un liant réticulable, biodégradable comprenant un produit solidifiable à l'air, un produit de charge et un ou plusieurs agents présentant une activité spécifique, on prépare séparément un mélange de fibres sèches naturelles de noix de coco et/ou de chanvre, opaques et/ou avec agent opacifiant complémentaire, et on projette en continu ledit mélange de fibres sèches simultanément à, et séparément d'avec, la pulvérisation dudit mélange aqueux, de sorte qu'on forme un produit pâteux opaque qui s'étale sur le terrain à protéger, puis on laisse sécher et solidifier.

11. Procédé selon la revendication 10, **caractérisé en ce qu'**on forme le mélange aqueux en mélangeant, pour 100 parties en poids d'eau, entre environ 20 parties en poids et 50 parties en poids de produit solidifiable à l'air et entre environ 10 parties en poids et environ 40 parties en poids de produit de charge.

12. Procédé selon l'une quelconque des revendications 10 et 11, **caractérisé en ce qu'**on ajoute dans le mélange aqueux un ou plusieurs des produits suivants : un agent anti-moussant, un agent ignifuge, un agent retardateur de flamme, un agent herbicide, un colorant naturel, un agent antifongique, un engrais.

13. Procédé selon l'une quelconque des revendications 10 à 12, **caractérisé en ce qu'**on forme le mélange de fibres sèches et d'agent opacifiant avec entre environ 1/2 et environ 3/4 du mélange composé de fibres de longueur comprise entre environ 1 cm et environ 5 cm, et avec entre environ 1/4 et environ 1/2 du mélange composé d'agent opacifiant formé de morceaux de matière de dimension maximale comprise entre environ 3 mm et environ 15 mm.

14. Procédé selon l'une quelconque des revendications 10 à 13, **caractérisé en ce qu'**on ajoute des semences au mélange de fibres sèches, avant projection.

15. Procédé selon l'une quelconque des revendications 10 à 14, **caractérisé en ce qu'**on projette le mélange aqueux avec un débit moyen liquide de l'ordre de 3 à 5 litres à la minute et le mélange de fibres sèches avec un débit gazeux moyen de l'ordre 30 à 50 litres à la minute.

16. Procédé de fabrication d'un couvre-sol selon la revendication 10, **caractérisé en ce qu'**on forme une nappe d'épaisseur comprise entre 50mm et 3 cm.

17. Dispositif (15) pour la fabrication d'un couvre-sol (11) de protection d'un terrain (1), **caractérisé en ce qu'**il comprend au moins une cuve (19, 20) de préparation d'un mélange aqueux pour produit liant à base aqueuse solidifiable à l'air, des moyens (17) d'alimentation de fibres sèches naturelles de noix de coco et/ou de chanvre, éventuellement d'au moins un agent opacifiant et d'un ou de plusieurs agents présentant une activité spécifique, des moyens (29) de défoisonnage / déchiquetage desdites fibres naturelles, des moyens (32, 34) de reprise de ces fibres défoisonnées par des moyens (34) ventilateurs d'aspersion desdites fibres sur le terrain et des moyens (21, 22, 25) de projection du mélange aqueux simultanément à, et séparément d'avec, ladite aspersion de fibres, de sorte qu'il est formé un mélange pâteux et opaque à la lumière propre à constituer le couvre-sol après séchage et solidification.

18. Dispositif (15) selon la revendication 17, **caractérisé en ce que** les moyens (21, 22, 25) de projection du produit liant comportent trois buses (25) disposées dans un plan parallèle.

19. Dispositif selon l'une quelconque des revendications 17 et 18, **caractérisé en ce qu'**il comporte de plus des moyens (40) d'introduction de semences dans le flux de fibres avant aspersion.

## Patentansprüche

1. Erdbodenbelag (11) zum Schutz eines Erdreichs (1) aus einer Mischung mit natürlichen Pflanzenfasern, die gegenüber Licht opak sind, und/oder Mischungen mit wenigstens einem gegenüber Licht undurchlässigen Stoff, und einem Binder, der zur Agglomeration der Fasern und gegebenenfalls des Stoffs dient, wobei der Binder vernetzbar, biologisch abbaubar ist und ein wässriges, in Luft erstarrendes Grundmaterial enthält,
**dadurch gekennzeichnet,**
**dass** die Fasern Kokosfasern und/oder Hanffasern sind und die Fasern getrennt und zur gleichen Zeit wie der Binder auf dem Erdboden versprüht werden, um eine Matte zu bilden, die sich an die Form des Erdreichs anpassen und teilweise Wasser absorbieren kann, für das die Matte wenigstens teilweise durchlässig ist.

2. Erdbodenbelag nach Anspruch 1,
**dadurch gekennzeichnet,**
**dass** die Fasern Kokosfasern mit einer mittleren Länge unterhalb von etwa 5 cm sind.

3. Erdbodenbelag nach einem der vorangehenden Ansprüche,
**dadurch gekennzeichnet,**
**dass** das an Luft erstarrende Produkt aus natürlichem Latex besteht.

4. Erdbodenbelag nach einem der vorangehenden Ansprüche,
**dadurch gekennzeichnet,**
**dass** der gegenüber Licht undurchsichtige Stoff aus Materialteilen oder biologisch abbaubaren langen Fasern besteht, die gegenüber Licht opak sind.

5. Erdbodenbelag nach einem der vorangehenden Ansprüche,
**dadurch gekennzeichnet,**
**dass** die Matte außerdem, alleine oder in Kombination, eines oder mehrerer der folgenden Produkte enthält: einen Antischaumstoff, einen feuerfesten Stoff, ein Unkrautbekämpfungsmittel, einen natürlichen Farbstoff, einen pilzwidrigen Stoff und einen Dünger.

6. Erdbodenbelag nach einem der vorangehenden Ansprüche,
**dadurch gekennzeichnet,**
**dass** er außerdem Pflanzensamen (42) enthält, die in wenigstens einem Teil der Matte verteilt sind.

7. Erdbodenbelag nach einem der vorangehenden Ansprüche,
**dadurch gekennzeichnet,**
**dass** die Matte für 100 Gewichtsanteile von Fasern zwischen ungefähr 40 und ungefähr 80 Gewichtsanteile des Binders enthält.

8. Erdbodenbelag nach Anspruch 7,
**dadurch gekennzeichnet,**
**dass** der Binder ein in Luft erstarrendes Produkt und ein Füllprodukt aufweist und für 100 Gewichtsanteile von Fasern zwischen ungefähr 20 Gewichtsanteilen und ungefähr 50 Gewichtsanteilen des Erstarrungsprodukts und zwischen ungefähr 10 Gewichtsanteilen und ungefähr 40 Gewichtsanteilen des Füllprodukts aufweist.

9. Erdbodenbelag nach einem der vorangehenden Ansprüche,
**dadurch gekennzeichnet,**
**dass** die Mischung aus Fasern und dem undurchsichtigen Stoff für 100 Gewichtsanteile der Mischung aus zwischen ungefähr 50 Gewichtsanteilen und ungefähr 75 Gewichtsanteilen aus Fasern mit einer Länge zwischen ungefähr 1 cm und ungefähr 5 cm und zwischen ungefähr 25 Gewichtsanteilen und ungefähr 50 Gewichtsanteilen der undurchsichtigen Agens besteht, das aus Materialteilen mit einer größeren Abmessung zwischen ungefähr 3 mm und ungefähr 15 mm besteht.

10. Verfahren zur Herstellung eines Erdbodenbelags (11) zum Schutz eines Erdreichs (1),
**dadurch gekennzeichnet,**
**dass** eine wässrige Mischung durch Mischung von Wasser, einem netzförmigen, biologisch abbaubaren Binder mit einem in Luft erstarrenden Produkt, einem Füllprodukt und einer oder mehreren Stoffen besteht, die eine spezifische Aktivität darstellen, dass getrennt eine Mischung aus trockenen, natürlichen Kokosfasern und/oder opakem Hanf und/oder mit einem komplementären undurchsichtigen Stoff vorbereitet wird und die Mischung aus trockenen Fasern gleichzeitig und getrennt der Sprühvorgang der wässrigen Mischung gesprüht wird derart, dass ein opakes pastenartiges Produkt gebildet wird, das sich auf dem zu schützenden Erdreich ausbreitet, und dann ermöglicht wird, dass das Produkt trocknet und sich verfestigt oder erstarrt.

11. Verfahren nach Anspruch 10,
**dadurch gekennzeichnet,**
**dass** die wässrige Mischung durch Mischung für 100 Gewichtsanteile an Wasser zwischen ungefähr 20 Gewichtsanteilen und 50 Gewichtsanteilen des sich in Luft verfestigenden Produkts und zwischen ungefähr 10 Gewichtsanteilen und ungefähr 40 Gewichtsanteilen des Füllmaterials gebildet wird.

12. Verfahren nach einem der Ansprüche 10 und 11,
**dadurch gekennzeichnet,**
**dass** in der wässrigen Mischung außerdem eines oder wenigstens ein aus der Gruppe ausgewähltes Material hinzugefügt wird, das aus folgenden Produkten besteht: einem Antischaumstoff, einem feuerfesten Stoff, einem flammenfesten Stoff, einem Unkrautbekämpfungsmittel, einem natürlichen Farbstoff, einem Fungizid und einem Düngemittel.

13. Verfahren nach einem der Ansprüche 10 bis 12,
**dadurch gekennzeichnet,**
**dass** die Mischung aus trockenen Fasern und aus einem durchsichtigen Stoff aus zwischen ungefähr 1/2 und ungefähr 3/4 der Mischung aus Fasern mit einer Länge zwischen ungefähr 1 cm und ungefähr 5 cm besteht und mit zwischen ungefähr 1/4 und ungefähr 1/2 der Mischung eines undurchsichtigen Stoffs besteht, der aus Materialteilen mit einer maximalen Abmessung zwischen ungefähr 3 mm und ungefähr 15 mm besteht.

14. Verfahren nach einem der Ansprüche 10 bis 13,
**dadurch gekennzeichnet,**
**dass** vor der Verbreitung Samen der Mischung aus trockenen Fasern hinzugefügt werden.

15. Verfahren nach einem der Ansprüche 10 bis 14,
**dadurch gekennzeichnet,**
**dass** die wässrige Mischung mit einer mittleren Durchflussrate in der Größenordnung von 3 bis 5 Liter in der Minute verbreitet wird und die Mischung aus trockenen Fasern mit einer mittleren Gasdurchflussrate in der Größenordnung von 30 bis 50 Litern in der Minute erfolgt.

16. Verfahren zur Herstellung eines Erdbodenbelags nach Anspruch 10,
**dadurch gekennzeichnet,**
**dass** eine Matte mit einer Dicke zwischen 50 mm und 3 cm gebildet wird.

17. Vorrichtung (15) für die Herstellung eines Erdbodenbelags (11) zum Schutz eines Erdreichs (1),
**gekennzeichnet durch** wenigstens einen Tank (19, 20) zur Vorbereitung einer wässrigen Mischung für einen Binder aus einem wässrigen, in Luft erstarrenden Grundmaterial, Mittel (17) zur Zuführung von trockenen, natürlichen Kokosfasern und/oder Hanffasern, gegebenenfalls aus wenigstens einem undurchsichtigen Stoff und einem oder mehreren Stoffen, die eine spezifische Aktivität darstellen, Mittel (29) zur Zerkleinerung oder zur Zerreißung in Stücke der natürlichen Fasern, Mitteln (32, 34) zur Wiederverwendung der natürlichen Fasern **durch** Ventilatormittel (34) zur Besprengung der Fasern auf dem Erdreich und Mittel (21, 22, 25) zur Verteilung der wässrigen Mischung bei, und getrennt davon, die Besprengung der Fasern derart, dass eine gegenüber Licht opake pastenartige Mischung gebildet wird, geeignet, um nach der Trocknung und Verfestigung den Erdbodenbelag zu bilden.

18. Vorrichtung (15) nach Anspruch 17,
**dadurch gekennzeichnet,**
**dass** die Mittel (21, 22, 25) zur Aufbringung des Binders drei Spritzdüsen (25) enthalten, die in einer parallelen Ebene angeordnet sind.

19. Vorrichtung nach einem der Ansprüche 17 und 18,
**gekennzeichnet durch** Mittel (40) zur Einfügung von Samen in den Fluss der Fasern vor der Besprengung.

## Claims

1. Ground cover (11) for protecting a plot of land (1), formed by a mixture comprising natural plant fibres that are light-opaque and/or mixed with at least one light-opacifying agent, and a binder product serving to agglomerate said fibres and said agent if appropriate, said binder product being cross-linkable, biodegradable and has an aqueous base solidifiable in air, **characterised in that** the fibres are coconut fibres and/or hemp fibres, said fibres being sprayed on the ground separately and at the same time as the binder, in order to form a layer capable of taking on the shape of the land and of partly absorbing water, to which it is at least partially permeable.

2. Ground cover according to Claim 1, **characterised in that** the fibres are coconut fibres with an average length of less than a value of the order of 5 cm.

3. Ground cover according to any one of the preceding claims, **characterised in that** the product that is solidifiable in air is natural latex.

4. Ground cover according to any one of the preceding claims, **characterised in that** the light-opacifying agent is formed of pieces of long fibres or materials that are biodegradable and light-opaque.

5. Ground cover according to any one of the preceding claims, **characterised in that** the layer further comprises, alone or in combination, one or more of the following products: an antifoaming agent, a fireproofing agent, a flame retardant, a herbicidal agent, a natural colorant, an antifungal agent, a fertiliser.

6. Ground cover according to any one of the preceding claims, **characterised in that** it further comprises plant seeds (42) distributed over at least a part of the layer.

7. Ground cover according to any one of the preceding claims, **characterised in that** the layer comprises, for 100 parts by weight of fibres, between about 40 parts and about 80 parts by weight of binder product.

8. Ground cover according to Claim 7, **characterised in that** the binder product comprises a product solidifiable in air and a filling product and **in that**, for 100 parts by weight of fibres, it comprises between about 20 parts by weight and about 50 parts by weight of solidifiable product and between about 10 parts by weight and about 40 parts by weight of filling product.

9. Ground cover according to any one of the preceding claims, **characterised in that** the mixture of fibres and opacifying agent is composed, for 100 parts by weight of mixture, of between about 50 parts and about 75 parts by weight of fibres with a length between about 1 cm and about 5 cm and between about 25 parts and about 50 parts by weight of opacifying agent formed of pieces of material having larger dimensions comprised between about 3 mm and about 15 mm.

10. Method for manufacturing a ground cover (11) for protecting a plot of land (1), **characterised in that** an aqueous mixture is formed by mixing water, a binder that is cross-linkable and biodegradable comprising a product solidifiable in air, a filling product and one or more agents having a specific activity, a mixture of natural dry coconut and/or hemp fibres that are opaque and/or have an additional opacifying agent is prepared separately, and said mixture of dry fibres is projected continuously simultaneously with, and separately from, the spraying of said aqueous mixture, so that an opaque pasty product is formed, which is spread over the plot of land to be protected, then it is left to dry and solidify.

11. Method according to Claim 10, **characterised in that** the aqueous mixture is formed by mixing, for 100 parts by weight of water, between about 20 parts by weight and 50 parts by weight of product solidifiable in air and between about 10 parts by weight and about 40 parts by weight of filling product.

12. Method according to any one of Claims 10 and 11, **characterised in that** one or more of the following products is added to the aqueous mixture: an antifoaming agent, a fireproofing agent, a flame retardant, a herbicidal agent, a natural colorant, an antifungal agent, a fertiliser.

13. Method according to any one of Claims 10 to 12, **characterised in that** the mixture of dry fibres and opacifying agent is formed with between about ½ and about ¾ of the mixture composed of fibres with a length comprised between about 1 cm and about 5 cm, and with between about ¼ and about ½ of the mixture composed of opacifying agent formed of pieces of material having maximum dimensions of between about 3 mm and about 15 mm.

14. Method according to any one of Claims 10 to 13, **characterised in that** seeds are added to the mixture of dry fibres, before projection.

15. Method according to any one of Claims 10 to 14, **characterised in that** the aqueous mixture is projected with an average liquid flow rate of the order of 3 to 5 litres per minute and the mixture of dry fibres with an average gaseous flow rate of the order of 30 to 50 litres per minute.

16. Method for manufacturing a ground cover according to Claim 10, **characterised in that** a layer is formed with a thickness comprised between 50 mm and 3 cm.

17. Device (15) for manufacturing a ground cover (11) for protecting a plot of land (1), **characterised in that** it comprises at least one tank (19, 20) for preparing an aqueous mixture for an aqueous-based binder product solidifiable in air, means (17) for supplying natural dry coconut and/or hemp fibres, optionally at least one opacifying agent and one or more agents having specific activity, means (29) for unexpanding / shredding said natural fibres, means (32, 34) for picking up these unexpanded fibres by ventilating means (34) for sprinkling said natural fibres over the land, and means (21, 22, 25) for projecting the aqueous mixture simultaneously with, and separately from, said sprinkling of fibres, so that a pasty mixture is formed, which is light-opaque and suitable for constituting the ground cover after drying and solidification.

18. Device (15) according to Claim 17, **characterised in that** the means (21, 22, 25) for projecting the binder product comprise three nozzles (25) arranged in a parallel plane.

19. Device according to any one of Claims 17 and 18, **characterised in that** it further comprises means (40) for introducing seeds into the stream of fibres before spraying.
